# EUROPEAN PATENT APPLICATION

(11) **EP 3 751 140 A1**
(43) Date of publication of application: **16.12.2020**
(21) Application number: 18905659.1
(22) Date of filing: 26.12.2018
(51) Int. Cl.: F04B 27/18, F16K 31/06

(54) **CONTROL VALVE FOR VARIABLE DISPLACEMENT COMPRESSOR**

(30) Priority: 08.02.2018 JP 2018021043
(71) Applicant: Fujikoki Corporation, Tokyo 158-0082 (JP)
(72) Inventor: ITOH, Masaharu, Tokyo 158-0082 (JP); SAKAMOTO, Takashi, Tokyo 158-0082 (JP); TANO, Shintaro, Tokyo 158-0082 (JP); SHIMADA, Kenki, Tokyo 158-0082 (JP)
(74) Representative: Schweiger, Martin
(86) International application number: PCT/JP2018/047969
(87) International publication number: WO 2019/155779

(57) **Abstract**

Provided is a variable-capacity compressor control valve that can efficiently cancel the influence of the refrigerant pressure acting on a main valve element and avoid increase in complexity of the structure and size of the control valve. A pressure equalizing passage 15 is provided which is adapted to guide a pressure Pc in a crank chamber acting on the lower end of a main valve element 10 to a pressure-sensitive chamber 45 so that the pressure Pc in the crank chamber acts on the upper end of the main valve element 10. When an electromagnetic actuator 30 (or a solenoid portion 30A thereof) is not supplied with current (i.e., when a valve orifice 22 is fully open), the introduction of a suction pressure Ps from Ps inlet/outlet ports 27 (Ps inlet/outlet chamber 28) into the pressure-sensitive chamber 45 is stopped, and the pressure Pc in the crank chamber is introduced into the pressure-sensitive chamber 45 via the pressure equalizing passage 15 so that the pressure Pc in the crank chamber acts on the upper and lower ends of the main valve element 10.

## Description

### Technical Field

The present invention relates to a variable-capacity compressor control valve for use in an automotive air conditioner, for example. In particular, the present invention relates to a variable-capacity compressor control valve in which, when current is not supplied, the influence of the refrigerant pressure acting on a valve element can be cancelled.

### Background Art

Usually, a control valve for a variable-capacity compressor used for an automotive air conditioner, for example, is adapted to receive a discharge pressure Pd from a discharge chamber of the compressor and control a pressure Pc in a crank chamber by controlling the discharge pressure Pd in accordance with a suction pressure Ps of the compressor. Typically, such a control valve has, as seen in Patent Literature 1 below, for example, a valve body that includes a valve chamber with a valve orifice, a Ps inlet/outlet port communicating with the suction chamber of the compressor, a Pd introduction port arranged upstream of the valve orifice and communicating with the discharge chamber of the compressor, and a Pc inlet/outlet port arranged downstream of the valve orifice and communicating with the crank chamber of the compressor; a main valve element (i.e., a valve stem) for opening or closing the valve orifice; an electromagnetic actuator including a plunger, the electromagnetic actuator being adapted to move the main valve element in the direction to open or close the valve orifice; a pressure-sensitive chamber adapted to receive the suction pressure Ps from the compressor via the Ps inlet/outlet port; and a pressure-sensitive reaction member, such as a bellows device, adapted to urge the main valve element in the direction to open or close the valve orifice in accordance with the pressure in the pressure-sensitive chamber.

A variable-capacity compressor control valve described in Patent Literature 2 below includes, in addition to the aforementioned configuration, an in-valve release passage for releasing the pressure Pc in the crank chamber to the suction chamber of the compressor via the Ps inlet/outlet port, and a sub valve element (i.e., a ball valve element) for opening or closing the in-valve release passage. When the plunger is continuously moved upward from the lowest position due to the attraction force of the electromagnetic actuator, the sub valve element moves upward together with the plunger while closing the in-valve release passage, and the main valve element is also moved upward so as to follow the sub valve element. Then, after the valve orifice is closed by the main valve element, if the plunger is further moved upward, the sub valve element is caused to open the in-valve release passage.

### Citation List

### Patent Literature

Patent Literature 1: JP 5553514 B
Patent Literature 2: JP 4550651 B

### Summary of Invention

### Technical Problem

By the way, in the variable-capacity compressor control valves of this type, if there is a difference between the force in a direction to open the valve and the force in a direction to close the valve due to the refrigerant pressure acting on the main valve element (i.e., the valve stem), control of the valve may be adversely affected (e.g., control accuracy may be reduced) (see Patent Literature 2, for example). Specifically, since the pressure Pc in the crank chamber is higher than the suction pressure Ps, the pressure difference (Pc-Ps) causes the main valve element and the plunger to be pressed upward in the valve-closing direction. If the pressure difference (Pc-Ps) increases, control of the valve may be adversely affected such that the main valve element tends to be in the closed position, and the in-valve release passage tends to be open, for example.

Thus, for example in the conventional variable-capacity compressor control valve disclosed in Patent Literature 1, the lower end of the main valve element faces a Ps introduction chamber that is adapted to receive the suction pressure Ps so that the suction pressure Ps acts on the lower end of the main valve element. Further, the valve body includes a suction pressure passage that is adapted to receive the suction pressure Ps of the compressor so that the suction pressure Ps is guided to the pressure-sensitive reaction member and the suction pressure Ps acts on the upper end of the main valve element. Thus, it is less likely that the refrigerant pressure acting on the main valve element adversely affects the control of the valve.

Meanwhile, in the conventional variable-capacity compressor control valve disclosed in Patent Literature 1, although the main valve element may easily be held in the fully open position (that is, compressor-off mode performance increases) when the valve orifice is fully open (i.e., when the capacity (discharge amount) control is off) because the suction pressure passage makes the force in the valve-opening direction and the force in the valve-closing direction due to the refrigerant pressure acting on the main valve element always equal to one another, the structure of the control valve may become complicated.

In addition, in the conventional variable-capacity compressor control valve disclosed in Patent Literature 1, the size of the valve body may be increased since the valve body is provided with the Ps introduction chamber that is adapted to receive the suction pressure Ps of the compressor and also provided with the suction pressure passage that is adapted to guide the suction pressure Ps of the compressor to the pressure-sensitive reaction member.

The present invention has been made in view of the foregoing, and it is an object of the present invention to provide a variable-capacity compressor control valve that can efficiently cancel the influence of the refrigerant pressure acting on the main valve element and can avoid increase in complexity of the structure and size of the control valve.

### Solution to Problem

To achieve the aforementioned objects, a variable-capacity compressor control valve according to the present invention basically includes: a main valve element including a main valve element portion; a valve body including a valve chamber with a valve orifice, the valve orifice being adapted to be in contact with or away from the main valve element portion, a Ps inlet/outlet port communicating with a suction chamber of a compressor, a Pd introduction port arranged upstream of the valve orifice and communicating with a discharge chamber of the compressor, and a Pc inlet/outlet port arranged downstream of the valve orifice and communicating with a crank chamber of the compressor; an electromagnetic actuator including a plunger, the electromagnetic actuator being adapted to move the main valve element in a direction to open or close the valve orifice; a pressure-sensitive chamber adapted to receive a suction pressure Ps from the compressor via the Ps inlet/outlet port; and a pressure-sensitive reaction member adapted to urge the main valve element in the direction to open or close the valve orifice in accordance with a pressure in the pressure-sensitive chamber, in which the pressure-sensitive chamber is provided at one end of the main valve element so that the suction pressure Ps acts on the one end of the main valve element, and the Pc inlet/outlet port is provided at another end of the main valve element so that a pressure Pc in the crank chamber from the compressor acts on the other end of the main valve element, a pressure equalizing passage is provided, the pressure equalizing passage being adapted to guide the pressure Pc in the crank chamber to the pressure-sensitive chamber, so that the pressure Pc in the crank chamber acts on the one end of the main valve element, and when the valve orifice is fully open, introduction of the suction pressure Ps from the Ps inlet/outlet port into the pressure-sensitive chamber is stopped, and the pressure Pc in the crank chamber is introduced into the pressure-sensitive chamber via the pressure equalizing passage so that the pressure Pc in the crank chamber acts on the one end and the other end of the main valve element.

In a more specific and preferable aspect, the pressure-sensitive chamber is provided at one end of the main valve element, the Pc inlet/outlet port is provided at another end of the main valve element so that a pressure Pc in the crank chamber from the compressor acts on the other end of the main valve element, and a pressure equalizing passage is provided, the pressure equalizing passage being adapted to guide the pressure Pc in the crank chamber to the pressure-sensitive chamber, so that the pressure Pc in the crank chamber acts on the one end of the main valve element, when the valve orifice is fully open, introduction of the suction pressure Ps from the Ps inlet/outlet port into the pressure-sensitive chamber is stopped, and the pressure Pc in the crank chamber is introduced into the pressure-sensitive chamber via the pressure equalizing passage so that the pressure Pc in the crank chamber acts on the one end and the other end of the main valve element, and when a valve opening degree of the valve orifice is controlled or when the valve orifice is closed, the suction pressure Ps is introduced into the pressure-sensitive chamber via the Ps inlet/outlet port so that the pressure Pc in the crank chamber acts on the other end of the main valve element and the suction pressure Ps acts on the one end of the main valve element.

In a preferable aspect, introduction of the suction pressure Ps from the Ps inlet/outlet port into the pressure-sensitive chamber is stopped by the plunger, the plunger being adapted to be slidable in the direction to open or close the valve orifice between the Ps input/output port and the pressure-sensitive chamber.

In further preferable aspect, introduction of the suction pressure Ps from the Ps inlet/outlet port into the pressure-sensitive chamber is stopped when the plunger abuts a stopper portion for defining a lowest position of the plunger.

In further preferable aspect, the stopper portion is provided in the valve body.

In further preferable aspect, a pressure receiving diameter of the plunger is set equal to a pressure receiving diameter of a portion of the stopper portion adapted to abut the plunger.

In further preferable aspect, the stopper portion includes a seat face portion and an inclined face portion, the seat face portion including an annular planar face adapted to abut the plunger, the inclined face portion including an inverted truncated cone face provided on an inner side of the seat face portion.

In another preferable aspect, the pressure equalizing passage is adapted to include an inner portion of the main valve element and an inner portion of the plunger.

In still another preferable aspect, the variable-capacity compressor control valve includes an in-valve release passage provided in the main valve element or the valve body, the in-valve release passage being adapted to release the pressure Pc in the crank chamber to the suction chamber of the compressor via the Ps inlet/outlet port; and a sub valve element adapted to open or close the in-valve release passage.

In addition, the variable-capacity compressor control valve according to the present invention basically includes: a main valve element including a main valve element portion; a valve body including a valve chamber with a valve orifice, the valve orifice being adapted to be in contact with or away from the main valve element portion, a Ps inlet/outlet port communicating with a suction chamber of a compressor, a Pd introduction port arranged upstream of the valve orifice and communicating with a discharge chamber of the compressor, and a Pc inlet/outlet port arranged downstream of the valve orifice and communicating with a crank chamber of the compressor; an electromagnetic actuator including a plunger, the electromagnetic actuator being adapted to move the main valve element in a direction to open or close the valve orifice; a pressure-sensitive chamber adapted to receive a suction pressure Ps from the compressor via the Ps inlet/outlet port; and a pressure-sensitive reaction member adapted to urge the main valve element in the direction to open or close the valve orifice in accordance with a pressure in the pressure-sensitive chamber, in which the pressure-sensitive chamber is provided at one end of the main valve element so that the suction pressure Ps acts on the one end of the main valve element, and the Pc inlet/outlet port is provided at another end of the main valve element so that a pressure Pc in the crank chamber from the compressor acts on the other end of the main valve element, and a pressure acting on the one end of the main valve element or a pressure acting on the other end of the main valve element is switched between the suction pressure Ps and the pressure Pc in the crank chamber when the valve orifice is fully open and either when a valve opening degree of the valve orifice is controlled or when the valve orifice is closed.

In a preferable aspect, when the valve orifice is fully open, a pressure acting on the one end of the main valve element is equal to a pressure acting on the other end of the main valve element, and when a valve opening degree of the valve orifice is controlled or when the valve orifice is closed, a pressure acting on the one end of the main valve element or a pressure acting on the other end of the main valve element is switched, and the main valve element is adapted to be urged in a valve-closing direction in response to a pressure difference between the one end and the other end of the main valve element.

In further preferable aspect, when the valve orifice is fully open, introduction of the suction pressure Ps from the Ps inlet/outlet port into the pressure-sensitive chamber is stopped so that the pressure Pc in the crank chamber acts on the one end and the other end of the main valve element, and when a valve opening degree of the valve orifice is controlled or when the valve orifice is closed, the suction pressure Ps is introduced into the pressure-sensitive chamber via the Ps inlet/outlet port so that the pressure Pc in the crank chamber acts on the other end of the main valve element and the suction pressure Ps acts on the one end of the main valve element, and the main valve element is adapted to be urged in a valve-closing direction in response to a pressure difference between the one end and the other end of the main valve element.

In further preferable aspect, a pressure equalizing passage is provided, the pressure equalizing passage being adapted to guide the pressure Pc in the crank chamber to the pressure-sensitive chamber so that the pressure Pc in the crank chamber acts on the one end of the main valve element.

### Advantageous Effects of Invention

According to the present invention, a pressure equalizing passage is provided which is adapted to guide a pressure Pc in a crank chamber acting on one end of the main valve element to the pressure-sensitive chamber so that the pressure Pc in the crank chamber acts on the other end of the main valve element. When the valve orifice is fully open, the introduction of the suction pressure Ps from the Ps inlet/outlet port into the pressure-sensitive chamber is stopped, and the pressure Pc in the crank chamber is introduced into the pressure-sensitive chamber via the pressure equalizing passage so that the pressure Pc in the crank chamber acts on one end and the other end of the main valve element.

In other words, the pressure acting on one end of the main valve element or the pressure acting on the other end of the main valve element is switched between the suction pressure Ps and the pressure Pc in the crank chamber when the valve orifice is fully open and either when the valve opening degree of the valve orifice is controlled or when the valve orifice is closed. More specifically, when the valve orifice is fully open, the pressure acting on one end of the main valve element is equal to the pressure acting on the other end of the main valve element (i.e., the pressure Pc in the crank chamber) through the pressure equalizing passage. Meanwhile, when the valve opening degree of the valve orifice is controlled or when the valve orifice is closed, the pressure acting on one end of the main valve element or the pressure acting on the other end of the main valve element is switched, and the main valve element is urged in the valve-closing direction in response to a pressure difference between one end and the other end of the main valve element.

Therefore, as compared to the conventional control valve in which the force in the valve-opening direction and the force in the valve-closing direction due to the refrigerant pressure acting on the main valve element are always equal to one another, for example, it is possible to efficiently cancel the influence of the refrigerant pressure acting on the main valve element.

In addition, since the pressure receiving diameter of the plunger which is slidable in the direction to open or close the valve orifice between the Ps inlet/outlet port and the pressure-sensitive chamber to stop introduction of the suction pressure Ps from the Ps inlet/outlet port into the pressure-sensitive chamber is set equal to the pressure receiving diameter of the portion adapted to abut the plunger within the stopper portion for defining the lowest position of the plunger, it is possible to certainly cancel the influence of the refrigerant pressure acting on the plunger.

In addition, since the stopper portion includes the seat face portion, which is an annular planar face adapted to abut the plunger, and the inclined face portion, which is an inverted truncated cone face provided on the inner side of the seat face portion, the contact area between the stopper portion and the plunger may be reduced, and thus the stopper portion and the plunger may avoid sticking contact with each other caused by the oil (i.e., oil for lubricating the compressor or the like) contained in the refrigerant. Furthermore, the stopper portion may have an adequate surface irregularity on the contact portion (i.e., the seat face portion).

In addition, since the pressure equalizing passage is adapted to include an inner portion of the main valve element and an inner portion of the plunger, as compared to the conventional control valve in which the valve body is provided with the suction pressure passage and the like, for example, it is possible to cancel the influence of the refrigerant pressure acting on the main valve element without increasing the size of the valve body.

### Brief Description of Drawings

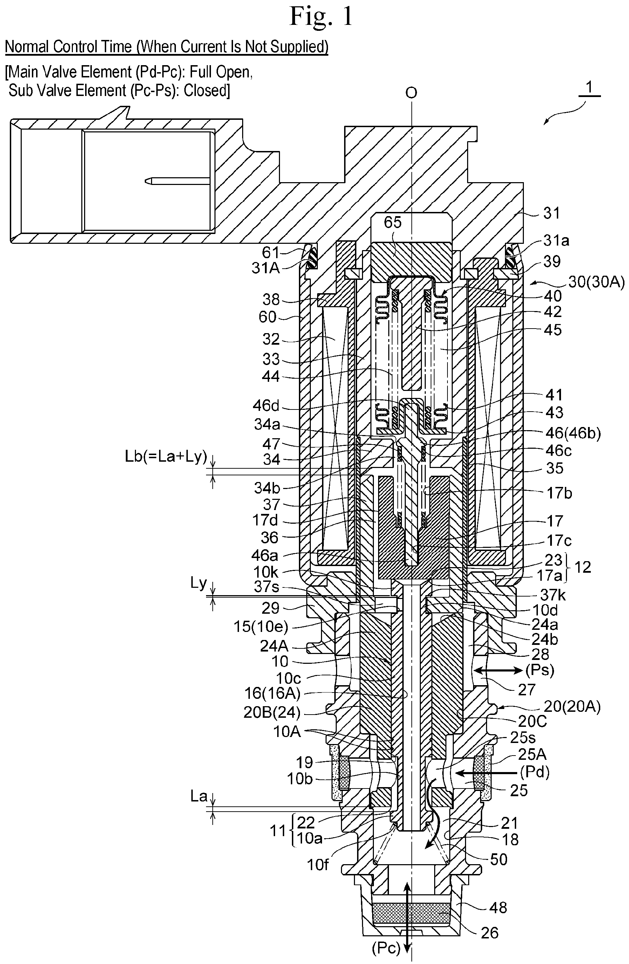

Fig. 1 is a longitudinal sectional view of one embodiment of the variable-capacity compressor control valve according to the present invention in which a main valve element is in the fully open position and a sub valve element is in the closed position (i.e., during the normal control time (i.e., when current is not supplied)).

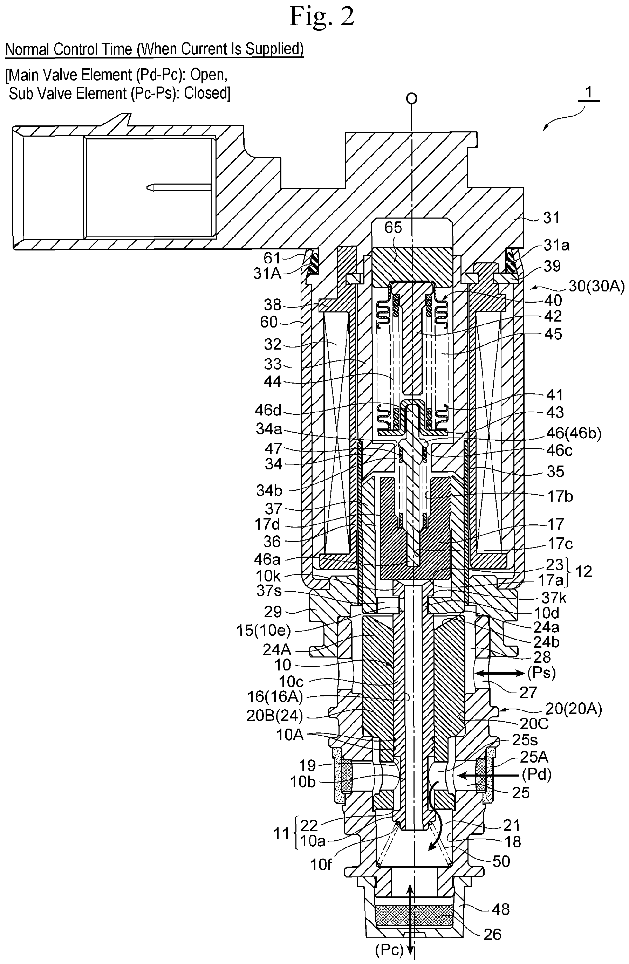

Fig. 2 is a longitudinal sectional view of one embodiment of the variable-capacity compressor control valve according to the present invention in which the main valve element is in the open position and the sub valve element is in the closed position (i.e., during the normal control time (i.e., when current is supplied)).

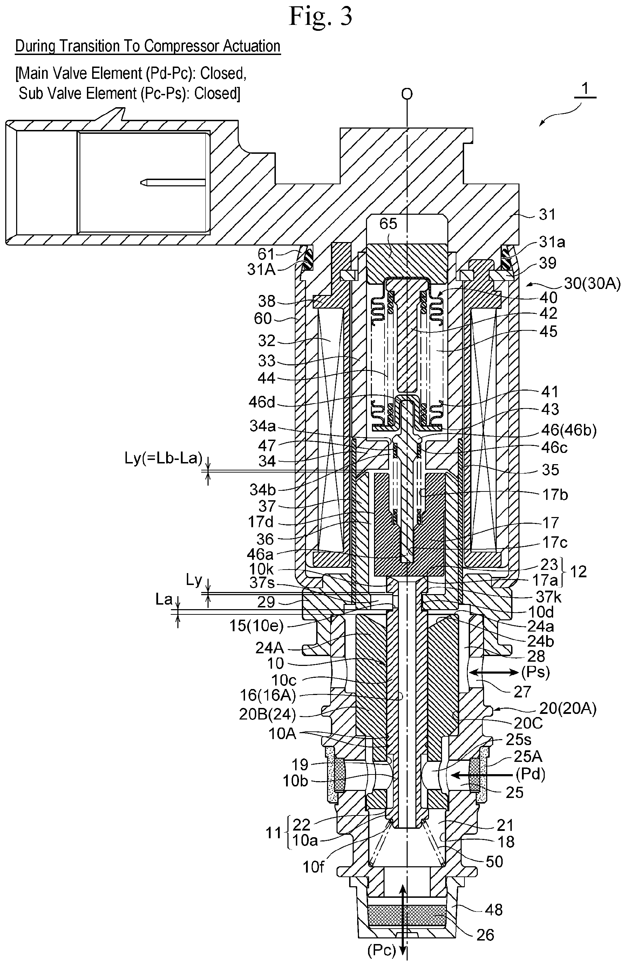

Fig. 3 is a longitudinal sectional view of one embodiment of the variable-capacity compressor control valve according to the present invention in which the main valve element is in the closed position and the sub valve element is in the closed position (i.e., during the time of transition to compressor actuation).

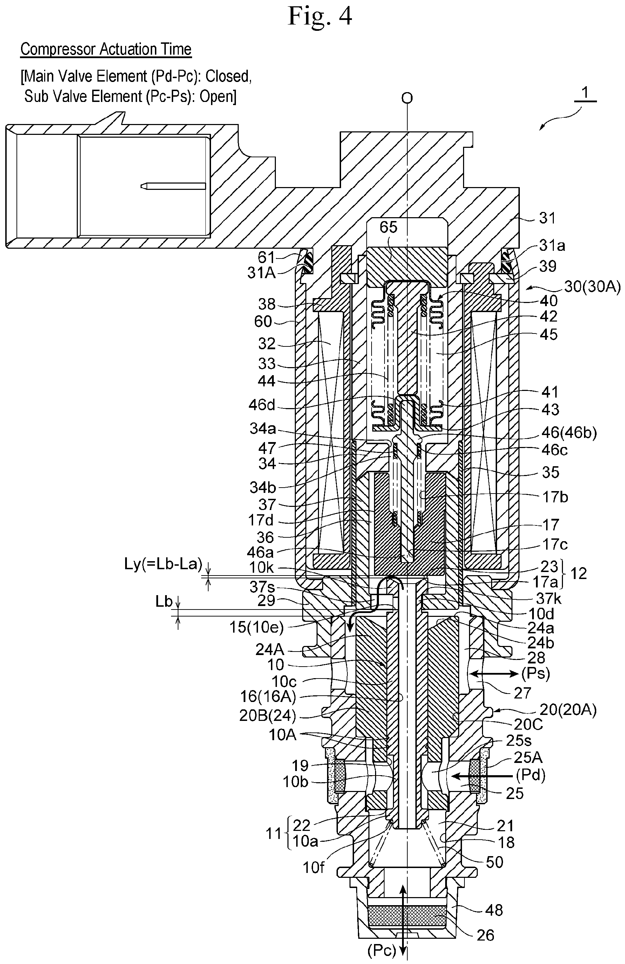

Fig. 4 is a longitudinal sectional view of one embodiment of the variable-capacity compressor control valve according to the present invention in which the main valve element is in the closed position and the sub valve element is in the open position (i.e., during the compressor actuation time).

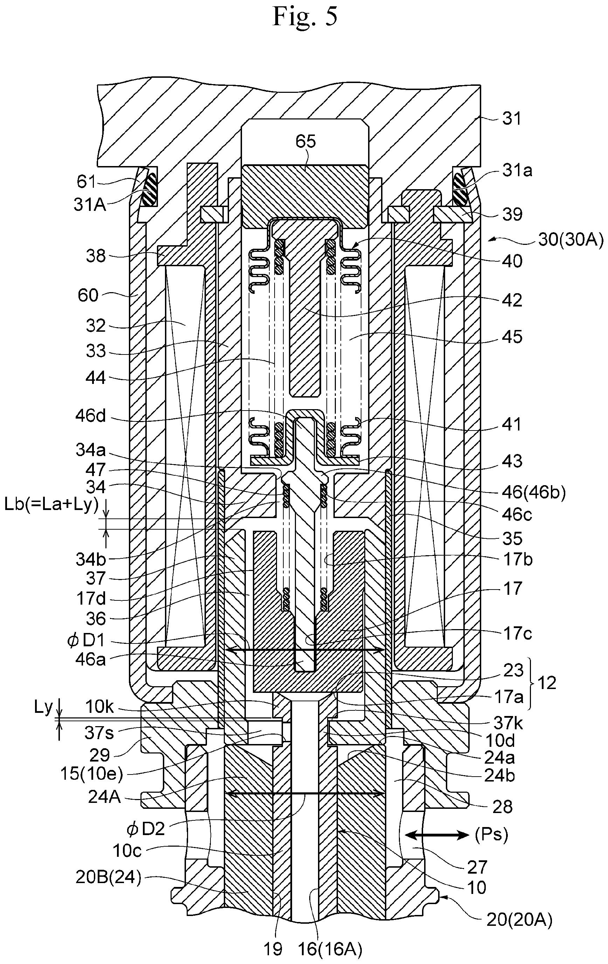

Fig. 5 is an enlarged longitudinal sectional view of the main part of Fig. 1.

### Description of Embodiments

Hereinafter, an embodiment of the present invention will be described with reference to the drawings.

Fig. 1 to Fig. 4 are longitudinal sectional views of one embodiment of the variable-capacity compressor control valve according to the present invention. Fig. 1 shows a state in which the main valve element is in the fully open position and the sub valve element is in the closed position (i.e., during the normal control time (i.e., when current is not supplied)). Fig. 2 shows a state in which the main valve element is in the open position and the sub valve element is in the closed position (i.e., during the normal control time (i.e., when current is supplied)). Fig. 3 shows a state in which the main valve element is in the closed position and the sub valve element is in the closed position (i.e., during the time of transition to compressor actuation). Fig. 4 shows a state in which the main valve element is in the closed position and the sub valve element is in the open position (i.e., during the compressor actuation time). It should be noted that Fig. 2 shows a state during the control time with current supplied (compared to Fig. 1) in which when an electromagnetic actuator 30 is supplied with current and energized (current is supplied), the valve opening degree of a valve orifice 22 is adjusted (i.e., the valve opening degree: small) (from the previous state in which the valve orifice 22 is fully open).

It should be noted that in the present specification, descriptions indicating the positions or directions, such as upper, lower, top, bottom, left, right, front, and rear, are used for the sake of convenience in accordance with the drawings to avoid complexity in the description, but such descriptions do not necessarily indicate the actual positions or directions when the control valve of the present invention is incorporated into a compressor.

In addition, in each drawing, a gap formed between some members, a clearance between some members, and the like may be depicted larger or smaller than their actual dimensions to help understand the invention and also for the sake of convenience to create the drawing.

### [Configuration of control valve 1]

A control valve 1 of the embodiment illustrated in the drawings basically includes a valve body 20 with a valve orifice 22, a main valve element 10 for opening or closing the valve orifice 22, an electromagnetic actuator 30 for moving the main valve element 10 in the direction to open or close the valve orifice (i.e., in the vertical direction), and a bellows device 40 serving as a pressure-sensitive reaction member.

The electromagnetic actuator 30 includes a bobbin 38, an energization coil 32 wound around the bobbin 38, a stator 33 and an attractor 34 arranged on the inner periphery side of the coil 32, a guide pipe 35 with its upper end joined by welding to the outer periphery of the lower end (i.e., a step portion) of the stator 33 and the attractor 34, a closed-bottomed cylindrical plunger 37 arranged such that it is vertically slidable on the inner periphery side of the guide pipe 35 below the attractor 34, a cylindrical housing 60 with a bottom hole externally arranged around the coil 32, a connector portion 31 attached to the upper side of the housing 60 with interposed therebetween an attachment plate 39, and a holder 29 disposed between the lower end (i.e., a bottom hole) of the housing 60 and the lower end of the guide pipe 35 and adapted to fix them to the upper portion of the valve body 20 (or a body member 20A thereof). In this example, the cylindrical attractor 34 with an insertion through-hole 34a formed in the center (along the axis O) thereof, which has a smaller diameter than the inside diameter of the stator 33, is integrally molded with the inner periphery of the lower portion of the cylindrical stator 33. The upper end (i.e., a thin portion) of the housing 60 is fixed by swaging (i.e., a swaging portion 61) to an annular groove 31a that is provided on the outer periphery of the connector portion 31 with an O ring 31A interposed as a sealing member. Herein, a portion of the electromagnetic actuator 30 including the coil 32, the stator 33, the attractor 34, and the like and excluding the plunger 37 is referred to as a "solenoid portion 30A."

A short columnar stator 65 is securely attached to the upper portion of the stator 33 by press fitting, for example, and a pressure-sensitive chamber 45, which is adapted to receive a suction pressure Ps in a compressor, is formed between the stator 65 and the attractor 34 on the inner periphery side of the stator 33. The pressure-sensitive chamber 45 has arranged therein the bellows device 40 as the pressure-sensitive reaction member that includes bellows 41, a downwardly projecting upper stopper 42, a downwardly recessed lower stopper 43, and a compression coil spring 44. Further, a stepped, bar-like pushrod 46, which is a thrust transmitting member, is disposed along the axis O below the bellows device 40. An upper portion around the center of the pushrod 46 has a large diameter (i.e., a large-diameter portion 46b). An upper end 46d of the pushrod 46 is fitted and inserted into the recess portion of the lower stopper 43 and thus is supported therein, while the large-diameter portion 46b of the pushrod 46 is inserted through the insertion through-hole 34a of the attractor 34 (with a small gap 34b therebetween). The lower portion of the pushrod 46 is inserted into a recess hole 17b of a sub valve element 17 with a recessed cross-section described below, and the lower end 46a thereof is fitted into a recessed fit-insertion hole 17c formed in the center of the bottom of the recess hole 17b.

The sub valve element 17 with the recessed cross-section, which has the recess hole 17b with an approximately equal diameter to that of the insertion through-hole 34a of the attractor 34, is securely inserted into the plunger 37 by press fitting, for example, such that the sub valve element 17 and the plunger 37 vertically move at the same time. The sub valve element 17 is fitted into the plunger 37 such that the upper end of the sub valve element 17 is aligned with the upper end of the plunger 37 (i.e., the upper end of the sub valve element 17 is positioned with respect to the inner periphery of the upper end of the plunger 37), while the lower end of the sub valve element 17 is spaced apart from the bottom of the plunger 37 (with a gap that allows a flanged latch portion 10k of the main valve element 10 to slightly move vertically, which will be described in detail later). The recessed fit-insertion hole 17c, which is adapted to have the lower end 46a of the pushrod 46 fitted and inserted therein, is formed in the center of the bottom of the recess hole 17b of the sub valve element 17.

A plunger spring (i.e., a valve-opening spring) 47, which is a cylindrical compression coil spring, is provided in a compressed state between a step portion (i.e., an annular terrace face facing downward) 46c formed on the upper portion of the large-diameter portion 46b of the pushrod 46 and the bottom of the recess hole 17b (i.e., a face thereof facing upward around the fit-insertion hole 17c) of the sub valve element 17 fitted in the plunger 37. With the plunger spring 47 (or the compression force thereof), the plunger 37 is urged downward (i.e., in the direction to open the valve) via the sub valve element 17, and the bellows device 40 is held within the pressure-sensitive chamber 45 via the pushrod 46. With the plunger spring 47 (or the compression force thereof), the sub valve element 17 is urged in the direction to close an in-valve release passage 16 (i.e., a release through-hole 16A) (described later). The lower end (i.e., a planar face) of the sub valve element 17 serves as a sub valve element portion 17a that opens and closes the in-valve release passage 16 (which will be described in detail later).

The plunger 37 has formed at its bottom a slit 37s with a through hole that extends linearly from the outer periphery thereof to the center (on the axis O) and passes therethrough the flanged latch portion 10k of the main valve element 10. The height (in the vertical direction) of the slit 37s (i.e., the thickness (or the height in the vertical direction) of the bottom of the plunger 37) is set slightly smaller than the height of an upper small-diameter portion 10d of the main valve element 10 so that the main valve element 10 is vertically movable with respect to the plunger 37 (this will be described in detail later). In addition, the width (in the horizontal direction) of the slit 37s is set slightly larger than the outside diameter of the upper small-diameter portion 10d of the main valve element 10 and smaller than the outside diameter of the flanged latch portion 10k of the main valve element 10, taking into consideration the assembly property and the like. The outer periphery portion of the slit 37s at the upper face of the bottom of the plunger 37 serves as an inner flanged latch portion 37k to which the flanged latch portion 10k of the main valve element 10 is adapted to be latched.

In this example, a communication groove 17d including a D-cut surface or one or more of vertical grooves, for example, is formed in a predetermined position (i.e., above the slit 37s in the example illustrated in the drawing) on the outer periphery of the sub valve element 17. The communication groove 17d serves to form a gap 36 between the outer periphery of the sub valve element 17 and the inner periphery of the plunger 37.

The main valve element 10 disposed below the plunger 37 and the sub valve element 17 is made of non-magnetic metal, for example, and is formed of a stepped shaft-shaped member disposed along the axis O. The main valve element 10 includes, from the lower side, a main valve element portion 10a with a relatively large diameter, a lower small-diameter portion 10b, an intermediate fit-inserted portion 10c that is vertically long, the upper small-diameter portion 10d, and the flanged latch portion 10k. An annular groove 10A is provided in each of two vertical positions on the outer periphery of the lower portion of the intermediate fit-inserted portion 10c.

As described above, the upper small-diameter portion 10d of the main valve element 10 is loosely fitted in the slit 37s, and the flanged latch portion 10k is loosely fitted on the inner side of the plunger 37 below the sub valve element 17 (i.e., in a space between the bottom of the plunger 37 and the lower end of the sub valve element 17). The flanged latch portion 10k has a larger diameter than the width of the slit 37s so that when the plunger 37 is moved upward with respect to the main valve element 10, the inner flanged latch portion 37k made of the outer periphery portion of the slit 37s is latched to the flanged latch portion 10k, and thus, latching is achieved and slippage is prevented. In addition, the intermediate fit-inserted portion 10c has a diameter that is slightly larger than the width of the slit 37s and smaller than the outside diameter of the plunger 37.

In this example, the release through-hole 16A, which partially forms the in-valve release passage 16 (which will be described later), is provided in the center of the main valve element 10 in a manner penetrating therethrough in the vertical direction (i.e., along the axis O), and a communication hole 10e, which is a horizontal hole partially forming a pressure equalizing passage 15 (which will described later) together with the release through-hole 16A, is formed in the upper small-diameter portion 10d.

Meanwhile, the valve body 20 has a two-component configuration including a stepped cylindrical body member 20A having a fit recess hole 20C in the center of the upper portion thereof and also having a housing hole 18, which is continuous with the recess hole 20C and has a slightly smaller diameter than that of the recess hole 20C, in the center of the lower portion thereof; and a cylindrical seat member 20B that is securely inserted into the recess hole 20C by press fitting, for example.

The seat member 20B is produced from stainless steel (SUS) or a high-hardness brass material, for example, and is provided with a stopper portion 24A for defining the lowest position of the plunger 37, in a protruding manner on the upper part of a stepped fit-insertion portion 24 which is adapted to be fitted and inserted into the recess hole 20C (i.e., so as to protrude from the fit-insertion portion 24 toward a Ps inlet/outlet chamber 28). The seat member 20B (or the stopper portion 24A thereof) has an outside diameter that is substantially equal to that of the plunger 37. The upper end face of the stopper portion 24A (i.e., the face opposite to the plunger 37) includes an outer periphery portion serving as a seat face portion 24a, which is an annular planar face adapted to abut the plunger 37 (i.e., the outer periphery portion of the lower end face of the plunger 37). On the inner side of the seat face portion 24a, an inclined face portion 24b, which is an inverted truncated cone face (which extends to a guide hole 19 (described later)) is provided (see also Fig. 5). The lower end of the seat member 20B (or the fit-insertion portion 24 thereof) is made to abut a step portion (i.e., a terrace portion) between the recess hole 20C and the housing hole 18 of the body member 20A. Further, the guide hole 19, through which the intermediate fit-inserted portion 10c of the main valve element 10 is slidably fitted and inserted, is provided in the center of the seat member 20B in a manner penetrating therethrough in the vertical direction (i.e., along the axis O). The lower end of the guide hole 19 serves as the valve orifice (i.e., a valve seat portion) 22 that is opened or closed by the main valve element portion 10a of the main valve element 10 (from the lower side). Herein, the main valve element portion 10a and the valve orifice 22 form a main valve unit 11.

As described above, since the pressure receiving diameter (i.e., the outside diameter) ϕD1 of the plunger 37 is set substantially equal to the pressure receiving diameter (i.e., the outside diameter) cpD2 of the portion (i.e., the seat face portion 24a) of the stopper portion 24A adapted to abut the plunger 37, when the plunger 37 abuts the stopper portion 24A of the seat member 20B (that is, when the plunger 37 is in the lowest position), the downward force (the force in the valve-opening direction) and the upward force (the force in the valve-closing direction) acting on the plunger 37 may cancel out each other (see Fig. 5) (this will be described in detail later).

In addition, since the inclined face portion 24b, which is an inverted truncated cone face with a shape recessed opposite to the plunger 37, is provided on the inner side of the seat face portion 24a on the upper end face of the stopper portion 24A opposite to the plunger 37, the contact area between the stopper portion 24A of the seat member 20B and the plunger 37 may be reduced, and thus the stopper portion 24A and the plunger 37 may avoid sticking contact with each other caused by the oil (i.e., oil for lubricating the compressor or the like) contained in the refrigerant. Furthermore, the stopper portion 24A may have an adequate surface irregularity on the contact portion (i.e., the seat face portion 24a).

In this example, as described above, when the plunger 37 (i.e., the outer periphery portion of the lower end face thereof) abuts the stopper portion 24A (or the seat face portion 24a thereof), the introduction of the suction pressure Ps from Ps inlet/outlet ports 27 (Ps inlet/outlet chamber 28) (described later) into the pressure-sensitive chamber 45 is stopped (blocked).

The body member 20A is produced from a material, such as aluminum, brass, or resin, for example. In a state in which the seat member 20B (or the fit-insertion portion 24 thereof) is inserted into the recess hole 20C of the body member 20A, the Ps inlet/outlet chamber 28 for the suction pressure Ps in the compressor is formed on the outer periphery of the stopper portion 24A (i.e., within the body member 20A on the upper end side of the seat member 20B), and a plurality of Ps inlet/outlet ports 27 are formed on the outer periphery side of the Ps inlet/outlet chamber 28. The suction pressure Ps introduced into the Ps inlet/outlet chamber 28 through the Ps inlet/outlet ports 27 is introduced into the pressure-sensitive chamber 45 via the gap between the stopper portion 24A (or the upper end face thereof) of the seat member 20B and the plunger 37 (or the lower end face thereof), the inside of the plunger 37 (i.e., the slit 37s and the gap 36 formed between the sub valve element 17 and the plunger 37), the gap 34b formed between the outer periphery of the pushrod 46 and the attractor 34, and the like.

In addition, the housing hole 18, which has a larger diameter than those of the guide hole 19 and the main valve element portion 10a of the main valve element 10, for housing the main valve element portion 10a is provided continuously with the center of the bottom of the recess hole 20C of the body member 20A. A valve-closing spring 50, which is a conical compression coil spring, is provided in a compressed state between a corner portion on the outer periphery of the bottom of the housing hole 18 and a step portion (i.e., a terrace portion) 10f provided on the outer periphery of the lower portion of the main valve element portion 10a of the main valve element 10. Thus, with the urging force of the valve-closing spring 50, the main valve element 10 is urged (upward) in the valve-closing direction, and the main valve element 10 (or the upper end of the flanged latch portion 10k thereof) is pressed against the sub valve element 17 (or the lower face thereof). Herein, the inside of the housing hole 18 (i.e., the portion of the seat member 20B below the valve orifice 22) is a valve chamber 21.

A plurality of Pd introduction ports 25 communicating with the discharge chamber of the compressor are provided in the recess hole 20C, and a ring-like filter member 25A is disposed around the outer periphery of the Pd introduction ports 25. In addition, a plurality of horizontal holes 25s communicating with the Pd introduction ports 25 and continuous with the guide hole 19 are provided in the fit-insertion portion 24 of the seat member 20B (in particular, at positions below the portion in which the intermediate fit-inserted portion 10c of the main valve element 10 is inserted) that is inserted into the recess hole 20C.

In addition, a lid-like member 48, which functions as a filter, is securely attached by press fitting, for example, to the lower end of the body member 20A. The Pc inlet/outlet chamber (inlet/outlet port) 26 communicating with the crank chamber of the compressor is arranged above the lid-like member 48 and below the housing hole 18 (i.e., within the body member 20A on the lower end side of the seat member 20B and downstream of the valve orifice 22). The Pc inlet/outlet chamber (inlet/outlet port) 26 is adapted to communicate with the Pd introduction ports 25 via the valve chamber 21 → the gap between the valve orifice 22 and the main valve element portion 10a → the gap between the lower portion of the guide hole 19 and the lower small-diameter portion 10b → the horizontal holes 25s of the fit-insertion portion 24.

In addition, in the present embodiment, the release through-hole 16A that allows the Pc inlet/outlet chamber 26 and the Ps inlet/outlet chamber 28 (or Ps inlet/outlet ports 27) to communicate with each other is provided in the center of the inside of the main valve element 10 in a manner penetrating therethrough in the vertical direction (i.e., the direction of the axis O).

The release through-hole 16A partially forms the in-valve release passage 16, and the upper end of the release through-hole 16A (or the upper end of the main valve element 10) serves as a sub valve seat portion 23 with/from which the lower end (or the sub valve element portion) 17a of the sub valve element 17 is adapted to be moved into contact or away.

The sub valve element 17 is securely inserted in the plunger 37 above the main valve element 10 as described above. The outside diameter of the sub valve element 17 (= the inside diameter of the plunger 37) is set larger than the outside diameter of the flanged latch portion 10k of the main valve element 10, and the lower end (i.e., a planar face) of the sub valve element 17 serves as the sub valve element portion 17a that is adapted to move into contact with or away from the sub valve seat portion (i.e., an inverted truncated cone portion) 23, which is the upper end edge of the release through-hole 16A, and thus open or close the in-valve release passage 16 (i.e., the release through-hole 16A). Herein, the sub valve seat portion 23 and the sub valve element portion 17a form a sub valve unit 12.

As described above, in the present embodiment, the Pc inlet/outlet chamber 26, the valve chamber 21, the release through-hole 16A formed in the main valve element 10, the inside of the plunger 37, the Ps inlet/outlet chamber 28, and the like form the in-valve release passage 16 for releasing the pressure Pc in the crank chamber to the suction chamber of the compressor via the Ps inlet/outlet ports 27. The in-valve release passage 16 is adapted to be opened or closed as the sub valve element portion (or the lower end) 17a of the sub valve element 17 is moved into contact with or away from the sub valve seat portion (or the inverted truncated cone portion) 23 that is the upper end edge of the release through-hole 16A.

Furthermore, in the present embodiment, in addition to the aforementioned configuration, when the electromagnetic actuator 30 (or the solenoid portion 30A thereof) is not supplied with current (that is, when the plunger 37 abuts the stopper portion 24A in the lowest position and the valve orifice 22 becomes fully open), the following measures are to be taken to bring into balance (i.e., to set off a pressure difference between) the force in the valve-opening direction (downward force) and the force in the valve-closing direction (upward force) due to the refrigerant pressure acting on the main valve element 10.

That is, in the present embodiment, the upper small-diameter portion 10d of the main valve element 10 (on the side where the slit 37s extends) is provided with the communication hole 10e, which is a horizontal hole, for allowing the release through-hole 16A formed inside of the main valve element 10 to communicate with the inside of the plunger 37 (i.e., the slit 37s portion) formed outside of the main valve element 10. The valve chamber 21, the release through-hole 16A and the communication hole 10e provided in the main valve element 10, the inside of the plunger 37 (i.e., the slit 37s and the gap 36 formed between the sub valve element 17 and the plunger 37), the gap 34b formed between the outer periphery of the pushrod 46 and the attractor 34, and the like form the pressure equalizing passage 15, which allows the Pc inlet/outlet chamber (inlet/outlet port) 26 provided at the lower end side of the main valve element 10 to (continuously) communicate with the pressure-sensitive chamber 45 provided at the upper end side of the main valve element 10 to guide the pressure Pc in the crank chamber to the pressure-sensitive chamber 45 (i.e., the bellows device 40 serving as a pressure-sensitive reaction member).

In the control valve 1 of the present embodiment with such a pressure equalizing passage 15, when the electromagnetic actuator 30 (or the solenoid portion 30A thereof) is not supplied with current (i.e., when the valve orifice 22 is fully open), the plunger 37 (i.e., the outer periphery portion of the lower end face of the plunger 37) abuts the stopper portion 24A (or the seat face portion 24a thereof), whereby the introduction of the suction pressure Ps from the Ps inlet/outlet ports 27 (the Ps inlet/outlet chamber 28) into the pressure-sensitive chamber 45 is stopped (blocked) and the pressure Pc in the crank chamber is introduced into the pressure-sensitive chamber 45 through the pressure equalizing passage 15 (from the Pc inlet/outlet chamber 26). Thus, the pressure Pc in the crank chamber acts on the upper and lower ends of the main valve element 10 (see Fig. 1).

Meanwhile, when the electromagnetic actuator 30 (or the solenoid portion 30A thereof) is supplied with current (i.e., when the valve opening degree of the valve orifice 22 is controlled or when the valve orifice 22 is closed), the plunger 37 (i.e., the outer periphery portion of the lower end face of the plunger 37) becomes separated from the stopper portion 24A (or the seat face portion 24a thereof), and the suction pressure Ps is introduced into the pressure-sensitive chamber 45 via the Ps inlet/outlet ports 27 (the Ps inlet/outlet chamber 28). Thus, the pressure Pc in the crank chamber acts on the lower end of the main valve element 10, the suction pressure Ps acts on the upper end of the main valve element 10 (that is, the pressure acting on the upper end of the main valve element 10 is switched from the pressure Pc in the crank chamber to the suction pressure Ps), and the main valve element 10 is urged (upward) in the valve-closing direction in response to the pressure difference (Pc-Ps) between the upper and lower ends of the main valve element 10 (see Fig. 2 to Fig. 4).

Herein, in the control valve 1 of this example, as described above, since the pressure receiving diameter (i.e., the outside diameter) ϕD1 of the plunger 37 is set substantially equal to the pressure receiving diameter (i.e., the outside diameter) cpD2 of the portion (i.e., the seat face portion 24a) of the stopper portion 24A adapted to abut the plunger 37, when the aforementioned electromagnetic actuator 30 (or the solenoid portion 30A thereof) is not supplied with current (i.e., when the valve orifice 22 is fully open), the downward force (the force in the valve-opening direction) and the upward force (the force in the valve-closing direction) acting on the plunger 37 may cancel out each other when the plunger 37 abuts the stopper portion 24A of the seat member 20B (that is, when the plunger 37 is in the lowest position) (see Fig. 5).

It should be noted that in the aforementioned embodiment, although the in-valve-body communication passage 16 (or the release through-hole 16A thereof) for releasing the pressure Pc in the crank chamber to the suction chamber of the compressor via the Ps inlet/outlet ports 27 partially serves as a portion of the pressure equalizing passage 15 (that is, the in-valve release passage 16 is used also as the pressure equalizing passage 15), it is needless to mention that the in-valve release passage 16 and the pressure equalizing passage 15 may be formed as separate components.

In addition, in the aforementioned embodiment, although the in-valve release passage 16 is adapted to include the release through-hole 16A, which is linearly formed in the main valve element 10 in the vertical direction, it is needless to specifically explain that the in-valve release passage 16 may be provided on the valve body 20 side (not in the main valve element 10), for example. It is also needless to mention that the in-valve release passage 16 may be omitted.

It is also needless to mention that the method of forming the in-valve release passage 16 (the release through-hole 16A) and the pressure equalizing passage 15, the shape, the arrangement, and the like thereof are not limited to those illustrated in the example.

In the aforementioned embodiment, although the valve body 20 has a two-component configuration including the body member 20A and the seat member 20B, it is needless to mention that the valve body 20 may be formed as a unitary component, for example.

In this example, in the control valve 1 of the present embodiment, when the plunger 37, the main valve element 10, and the sub valve element 17 are at the lowest position (when the bottom end face of the plunger 37 abuts the stopper portion 24A, the main valve unit 11 is in the fully open position, and the sub valve unit 12 is in the fully closed position) as illustrated in Fig. 1, the clearance in the vertical direction between the main valve element portion 10a of the main valve element 10 and the valve orifice (i.e., the valve seat portion) 22 is represented by a first lift amount La, and the clearance between the inner flanged latch portion 37k of the plunger 37 and the flanged latch portion 10k of the main valve element 10 is represented by a predetermined amount Ly. The maximum lift amount (i.e., second lift amount) Lb of the plunger 37 (i.e., the lift amount of from the lowest position to the highest position of the plunger 37) corresponds to the first lift amount La + the predetermined amount Ly.

### [Operation of control valve 1]

Next, the operation of the control valve 1 with the aforementioned configuration will be briefly described.

As described above, in the control valve 1 of this example, when the electromagnetic actuator 30 (or the solenoid portion 30A thereof) is not supplied with current, the force in the valve-opening direction (downward force) and the force in the valve-closing direction (upward force) (that is, the force acting on the main valve element 10 in the moving direction thereof (i.e., in the direction of the axis O)) due to the refrigerant pressure acting on the main valve element 10 are brought into balance (i.e., the pressure difference therebetween is set off) through the pressure equalizing passage 15, whereas when the electromagnetic actuator 30 (or the solenoid portion 30A thereof) is supplied with current, the plunger 37 (or the outer periphery portion of the lower end face of the plunger 37) becomes separated from the stopper portion 24A (or the seat face portion 24a thereof), and the main valve element 10 is urged (upward) in the valve-closing direction in response to the pressure difference (Pc-Ps) between the upper and lower ends of the main valve element 10.

During the normal control time (Pd → Pc control time), the lift amount of the plunger 37 (and the sub valve element 17) is slightly greater than the first lift amount La at the maximum, and during the compressor actuation time (Pc → Ps control time), the lift amount of the plunger 37 (and the sub valve element 17) is the second lift amount Lb.

That is, during the normal control time (Pd → Pc control time), when the solenoid portion 30A including the coil 32, the stator 33, the attractor 34, and the like becomes supplied with current and energized from the previous state in which current is not supplied (see Fig. 1), the plunger 37 and the sub valve element 17 are attracted (upwardly) by the attractor 34, and along with the movement of the plunger 37 and the sub valve element 17, the main valve element 10 is moved upward (in the direction to close the valve) with the urging force of the valve-closing spring 50. Meanwhile, the suction pressure Ps introduced into the Ps inlet/outlet ports 27 from the compressor is introduced into the pressure-sensitive chamber 45 through the Ps inlet/outlet chamber 28 via the gap between the stopper portion 24A (or the upper end face thereof) of the seat member 20B and the plunger 37 (or the lower end face thereof), the inside of the plunger 37 (i.e., the slit 37s and the gap 36 between the outer periphery of the sub valve element 17 and the inner periphery of the plunger 37) and the like, and the bellows device 40 (the inside thereof is at a vacuum pressure) is expansively or contractively displaced in accordance with the pressure (i.e., suction pressure Ps) in the pressure-sensitive chamber 45 (contracts if the suction pressure Ps is high and expands if it is low), and the displacement is then transmitted to the main valve element 10 via the pushrod 46, the sub valve element 17, and the like, whereby the valve opening degree (i.e., clearance between the valve orifice 22 and the main valve element portion 10a) is regulated, and the pressure Pc in the crank chamber is controlled in accordance with the valve opening degree.

In this case, the main valve element 10 is always urged upward with the urging force of the valve-closing spring 50, and the sub valve element 17 is always urged downward with the urging force of a valve-opening spring 47. Therefore, the sub valve element portion 17a is in a state of being pressed against the sub valve seat portion 23 (i.e., the sub valve unit 12 is closed), and the in-valve release passage 16 is blocked within the main valve element 10. Therefore, the pressure Pc in the crank chamber will not be released to the suction chamber via the in-valve release passage 16 (see Fig. 1 and Fig. 2).

In contrast, during the compressor actuation time, the solenoid portion 30A is supplied with current and energized, and the plunger 37 and the sub valve element 17 are attracted (upwardly) by the attractor 34, and along with the upward movement of the plunger 37 and the sub valve element 17, the main valve element 10 is moved upward and the valve orifice 22 is closed by the main valve element portion 10a of the main valve element 10. After that, the plunger 37 and the sub valve element 17 are further moved upward, whereby the sub valve element 17 is caused to open the in-valve release passage 16. Thus, the pressure Pc in the crank chamber is released into the suction chamber via the in-valve release passage 16.

Specifically, until the upward movement amount of the plunger 37 (and the sub valve element 17) reaches the first lift amount La, the main valve element 10 moves in the direction to close the valve such that it follows the upward movement of the plunger 37 and the sub valve element 17 with the urging force of the valve-closing spring 50. Then, when the upward movement amount has reached the first lift amount La, the valve orifice 22 is closed by the main valve element portion 10a of the main valve element 10 (the state illustrated in Fig. 3), and, with the main valve unit 11 in the closed-valve state, the plunger 37 and the sub valve element 17 are further moved upward by the predetermined amount Ly (the state illustrated in Fig. 4). In other words, after the upward movement amount of the plunger 37 and the sub valve element 17 reaches the first lift amount La, the sub valve element 17 together with the plunger 37 is attracted by the attractor 34 until the inner flanged latch portion 37k of the plunger 37 is latched to the flanged latch portion 10k of the main valve element 10, that is, by the predetermined amount of Ly (the first lift amount La + the predetermined amount Ly = the second lift amount Lb). In such a case, the main valve element 10 remains still in the closed-valve state, while the sub valve element portion 17a of the sub valve element 17 is lifted from the sub valve seat portion 23 by the predetermined amount Ly, whereby the in-valve release passage 16 is opened. When the inner flanged latch portion 37k of the plunger 37 is latched to the flanged latch portion 10k of the main valve element 10, neither the plunger 37 nor the sub valve element 17 is lifted any further even if the solenoid portion 30A generates attraction.

As described above, in the control valve 1 of the present embodiment, since the pressure Pc in the crank chamber is released into the suction chamber via the in-valve release passage 16 during the compressor actuation time, it is possible to significantly shorten the time required to increase the discharge capacity during the compressor actuation time. In addition, since the in-valve release passage 16 is closed by the sub valve element 17 during the normal control time (i.e., Pd→Pc control time), the operation efficiency of the compressor will not decrease.

In addition, in the control valve 1 of the present embodiment, the pressure equalizing passage 15 is provided which is adapted to guide the pressure Pc in the crank chamber acting on the lower end of the main valve element 10 to the pressure-sensitive chamber 45 so that the pressure Pc in the crank chamber acts on the upper end of the main valve element 10. When the electromagnetic actuator 30 (or the solenoid portion 30A thereof) is not supplied with current (i.e., when the valve orifice 22 is fully open), the introduction of the suction pressure Ps from the Ps inlet/outlet ports 27 (the Ps input/outlet chamber 28) into the pressure-sensitive chamber 45 is stopped, and the pressure Pc in the crank chamber is introduced into the pressure-sensitive chamber 45 via the pressure equalizing passage 15 so that the pressure Pc in the crank chamber acts on the upper and lower ends of the main valve element 10.

In other words, the pressure acting on the upper end of the main valve element 10 or the pressure acting on the lower end of the main valve element 10 is switched between the suction pressure Ps and the pressure Pc in the crank chamber when the valve orifice 22 is fully open and either when the valve opening degree of the valve orifice 22 is controlled or when the valve orifice 22 is closed. More specifically, when the valve orifice 22 is fully open, the pressure acting on the upper end of the main valve element 10 is equal to the pressure acting on the lower end of the main valve element 10 (i.e., the pressure Pc in the crank chamber) through the pressure equalizing passage 15. Meanwhile, when the valve opening degree of the valve orifice 22 is controlled or when the valve orifice 22 is closed, the pressure acting on the upper end of the main valve element 10 is switched from the pressure Pc in the crank chamber to the suction pressure Ps, and the main valve element 10 is urged in the valve-closing direction in response to the pressure difference (Pc-Ps) between the upper and lower ends of the main valve element 10.

Therefore, as compared to the conventional control valve in which the force in the valve-opening direction and the force in the valve-closing direction due to the refrigerant pressure acting on the main valve element are always equal to one another, for example, it is possible to efficiently cancel the influence of the refrigerant pressure acting on the main valve element 10.

In addition, since the pressure receiving diameter (i.e., the outside diameter) ϕD1 of the plunger 37, which is vertically slidable (in the direction to open or close the valve orifice) between the Ps inlet/outlet ports 27 (Ps inlet/outlet chamber 28) and the pressure-sensitive chamber 45 to stop introduction of the suction pressure Ps from the Ps inlet/outlet ports 27 (Ps inlet/outlet chamber 28) into the pressure-sensitive chamber 45, is set substantially equal to the pressure receiving diameter (i.e., the outside diameter) ϕD2 of the portion (i.e., the seat face portion 24a) adapted to abut the plunger 37 within the stopper portion 24A for defining the lowest position of the plunger 37, it is possible to certainly cancel the influence of the refrigerant pressure acting on the plunger 37.

In addition, since the stopper portion 24A includes the seat face portion 24a, which is an annular planar face adapted to abut the plunger 37, and the inclined face portion 24b, which is an inverted truncated cone face provided on the inner side of the seat face portion 24a, the contact area between the stopper portion 24A and the plunger 37 may be reduced, and thus the stopper portion 24A and the plunger 37 may avoid sticking contact with each other caused by the oil (i.e., oil for lubricating the compressor or the like) contained in the refrigerant. Furthermore, the stopper portion 24A may have an adequate surface irregularity on the contact portion (i.e., the seat face portion 24a).

In addition, since the pressure equalizing passage 15 is adapted to include the inner portion of the main valve element 10 (i.e., the release through-hole 16A and the communication hole 10e) and the inner portion of the plunger 37 (i.e., the slit 37s and the gap 36 formed between the sub valve element 17 and the plunger 37), as compared to the conventional control valve in which the valve body is provided with the suction pressure passage and the like, for example, it is possible to cancel the influence of the refrigerant pressure acting on the main valve element 10 without increasing the size of the valve body 20.

### Reference Signs List

- 1: Variable-capacity compressor control valve
- 10: Main valve element
- 10a: Main valve element portion
- 10b: Lower small-diameter portion
- 10c: Intermediate fit-inserted portion
- 10d: Upper small-diameter portion
- 10e: Communication hole
- 10k: Flanged latch portion
- 11: Main valve unit
- 12: Sub valve unit
- 15: Pressure equalizing passage
- 16: In-valve release passage
- 16A: Release through-hole
- 17: Sub valve element
- 17a: Sub valve element portion
- 18: Housing hole
- 19: Guide hole
- 20: Valve body
- 20A: Body member
- 20B: Seat member
- 20C: Recess hole
- 21: Valve chamber
- 22: Valve orifice
- 23: Sub valve seat portion
- 24: Fit-insertion portion
- 24A: Stopper portion
- 24a: Seat face portion
- 24b: Inclined face portion
- 25: Pd introduction port
- 26: Pc inlet/outlet chamber (inlet/outlet port)
- 27: Ps inlet/outlet port
- 28: Ps inlet/outlet chamber
- 30: Electromagnetic actuator
- 30A: Solenoid portion
- 32: Coil
- 33: Stator
- 34: Attractor
- 37: Plunger
- 37s: Slit
- 40: Bellows device (pressure-sensitive reaction member)
- 45: Pressure-sensitive chamber
- 46: Pushrod
- 50: Valve-closing spring

## Claims

1. A variable-capacity compressor control valve, comprising:
a main valve element including a main valve element portion;
a valve body including
a valve chamber with a valve orifice, the valve orifice being adapted to be in contact with or away from the main valve element portion,
a Ps inlet/outlet port communicating with a suction chamber of a compressor,
a Pd introduction port arranged upstream of the valve orifice and communicating with a discharge chamber of the compressor, and
a Pc inlet/outlet port arranged downstream of the valve orifice and communicating with a crank chamber of the compressor;
an electromagnetic actuator including a plunger, the electromagnetic actuator being adapted to move the main valve element in a direction to open or close the valve orifice;
a pressure-sensitive chamber adapted to receive a suction pressure Ps from the compressor via the Ps inlet/outlet port; and
a pressure-sensitive reaction member adapted to urge the main valve element in the direction to open or close the valve orifice in accordance with a pressure in the pressure-sensitive chamber,
wherein:
the pressure-sensitive chamber is provided at one end of the main valve element so that the suction pressure Ps acts on the one end of the main valve element, and the Pc inlet/outlet port is provided at another end of the main valve element so that a pressure Pc in the crank chamber from the compressor acts on the other end of the main valve element,
a pressure equalizing passage is provided, the pressure equalizing passage being adapted to guide the pressure Pc in the crank chamber to the pressure-sensitive chamber, so that the pressure Pc in the crank chamber acts on the one end of the main valve element, and
when the valve orifice is fully open, introduction of the suction pressure Ps from the Ps inlet/outlet port into the pressure-sensitive chamber is stopped, and the pressure Pc in the crank chamber is introduced into the pressure-sensitive chamber via the pressure equalizing passage so that the pressure Pc in the crank chamber acts on the one end and the other end of the main valve element.

2. A variable-capacity compressor control valve, comprising:
a main valve element including a main valve element portion;
a valve body including
a valve chamber with a valve orifice, the valve orifice being adapted to be in contact with or away from the main valve element portion,
a Ps inlet/outlet port communicating with a suction chamber of a compressor,
a Pd introduction port arranged upstream of the valve orifice and communicating with a discharge chamber of the compressor, and
a Pc inlet/outlet port arranged downstream of the valve orifice and communicating with a crank chamber of the compressor;
an electromagnetic actuator including a plunger, the electromagnetic actuator being adapted to move the main valve element in a direction to open or close the valve orifice;
a pressure-sensitive chamber adapted to receive a suction pressure Ps from the compressor via the Ps inlet/outlet port; and
a pressure-sensitive reaction member adapted to urge the main valve element in the direction to open or close the valve orifice in accordance with a pressure in the pressure-sensitive chamber,
wherein:
the pressure-sensitive chamber is provided at one end of the main valve element, the Pc inlet/outlet port is provided at another end of the main valve element so that a pressure Pc in the crank chamber from the compressor acts on the other end of the main valve element, and a pressure equalizing passage is provided, the pressure equalizing passage being adapted to guide the pressure Pc in the crank chamber to the pressure-sensitive chamber, so that the pressure Pc in the crank chamber acts on the one end of the main valve element,
when the valve orifice is fully open, introduction of the suction pressure Ps from the Ps inlet/outlet port into the pressure-sensitive chamber is stopped, and the pressure Pc in the crank chamber is introduced into the pressure-sensitive chamber via the pressure equalizing passage so that the pressure Pc in the crank chamber acts on the one end and the other end of the main valve element, and
when a valve opening degree of the valve orifice is controlled or when the valve orifice is closed, the suction pressure Ps is introduced into the pressure-sensitive chamber via the Ps inlet/outlet port so that the pressure Pc in the crank chamber acts on the other end of the main valve element and the suction pressure Ps acts on the one end of the main valve element.

3. The variable-capacity compressor control valve according to claim 1 or 2, wherein introduction of the suction pressure Ps from the Ps inlet/outlet port into the pressure-sensitive chamber is stopped by the plunger, the plunger being adapted to be slidable in the direction to open or close the valve orifice between the Ps input/output port and the pressure-sensitive chamber.

4. The variable-capacity compressor control valve according to claim 3, wherein introduction of the suction pressure Ps from the Ps inlet/outlet port into the pressure-sensitive chamber is stopped when the plunger abuts a stopper portion for defining a lowest position of the plunger.

5. The variable-capacity compressor control valve according to claim 4, wherein the stopper portion is provided in the valve body.

6. The variable-capacity compressor control valve according to claim 4 or 5, wherein a pressure receiving diameter of the plunger is set equal to a pressure receiving diameter of a portion of the stopper portion adapted to abut the plunger.

7. The variable-capacity compressor control valve according to any one of claims 4 to 6, wherein the stopper portion includes a seat face portion and an inclined face portion, the seat face portion including an annular planar face adapted to abut the plunger, the inclined face portion including an inverted truncated cone face provided on an inner side of the seat face portion.

8. The variable-capacity compressor control valve according to any one of claims 1 to 7, wherein the pressure equalizing passage is adapted to include an inner portion of the main valve element and an inner portion of the plunger.

9. The variable-capacity compressor control valve according to any one of claims 1 to 8, further comprising:
an in-valve release passage provided in the main valve element or the valve body, the in-valve release passage being adapted to release the pressure Pc in the crank chamber to the suction chamber of the compressor via the Ps inlet/outlet port; and
a sub valve element adapted to open or close the in-valve release passage.

10. The variable-capacity compressor control valve according to claim 9, wherein:
the in-valve release passage adapted to release the pressure Pc in the crank chamber to the suction chamber of the compressor via the Ps inlet/outlet port is provided in the main valve element, and
the in-valve release passage partially serves as a portion of the pressure equalizing passage.

11. The variable-capacity compressor control valve according to claim 10, wherein the sub valve element is securely inserted into the plunger.

12. The variable-capacity compressor control valve according to claim 11, wherein the pressure equalizing passage is adapted to include a gap formed between the plunger and the sub valve element.

13. A variable-capacity compressor control valve, comprising:
a main valve element including a main valve element portion;
a valve body including
a valve chamber with a valve orifice, the valve orifice being adapted to be in contact with or away from the main valve element portion,
a Ps inlet/outlet port communicating with a suction chamber of a compressor,
a Pd introduction port arranged upstream of the valve orifice and communicating with a discharge chamber of the compressor, and
a Pc inlet/outlet port arranged downstream of the valve orifice and communicating with a crank chamber of the compressor;
an electromagnetic actuator including a plunger, the electromagnetic actuator being adapted to move the main valve element in a direction to open or close the valve orifice;
a pressure-sensitive chamber adapted to receive a suction pressure Ps from the compressor via the Ps inlet/outlet port; and
a pressure-sensitive reaction member adapted to urge the main valve element in the direction to open or close the valve orifice in accordance with a pressure in the pressure-sensitive chamber,
wherein:
the pressure-sensitive chamber is provided at one end of the main valve element so that the suction pressure Ps acts on the one end of the main valve element, and the Pc inlet/outlet port is provided at another end of the main valve element so that a pressure Pc in the crank chamber from the compressor acts on the other end of the main valve element, and
a pressure acting on the one end of the main valve element or a pressure acting on the other end of the main valve element is switched between the suction pressure Ps and the pressure Pc in the crank chamber when the valve orifice is fully open and either when a valve opening degree of the valve orifice is controlled or when the valve orifice is closed.

14. The variable-capacity compressor control valve according to claim 13,
wherein:
when the valve orifice is fully open, a pressure acting on the one end of the main valve element is equal to a pressure acting on the other end of the main valve element, and
when a valve opening degree of the valve orifice is controlled or when the valve orifice is closed, a pressure acting on the one end of the main valve element or a pressure acting on the other end of the main valve element is switched, and the main valve element is adapted to be urged in a valve-closing direction in response to a pressure difference between the one end and the other end of the main valve element.

15. The variable-capacity compressor control valve according to claim 14,
wherein:
when the valve orifice is fully open, introduction of the suction pressure Ps from the Ps inlet/outlet port into the pressure-sensitive chamber is stopped so that the pressure Pc in the crank chamber acts on the one end and the other end of the main valve element, and
when a valve opening degree of the valve orifice is controlled or when the valve orifice is closed, the suction pressure Ps is introduced into the pressure-sensitive chamber via the Ps inlet/outlet port so that the pressure Pc in the crank chamber acts on the other end of the main valve element and the suction pressure Ps acts on the one end of the main valve element, and the main valve element is adapted to be urged in a valve-closing direction in response to a pressure difference between the one end and the other end of the main valve element.

16. The variable-capacity compressor control valve according to claim 15, wherein a pressure equalizing passage is provided, the pressure equalizing passage being adapted to guide the pressure Pc in the crank chamber to the pressure-sensitive chamber so that the pressure Pc in the crank chamber acts on the one end of the main valve element.
